# EUROPÄISCHE PATENTSCHRIFT

(11) **EP 3 823 738 B1**
(45) Veröffentlichungstag und Bekanntmachung des Hinweises auf die Patenterteilung: **05.04.2023**
(21) Anmeldenummer: 19742682.8
(22) Anmeldetag: 04.07.2019
(51) Int. Cl.: B01D 53/00, C10K 1/00, C02F 1/20, C01B 3/02

(54) **VERFAHREN UND VORRICHTUNG ZUR ABKÜHLUNG EINES SYNTHESEGASSTROMS**
METHOD AND DEVICE FOR COOLING A SYNTHESIS GAS FLOW
PROCÉDÉ ET DISPOSITIF DE REFROIDISSEMENT D'UN FLUX DE GAZ DE SYNTHÈSE

(30) Priorität: 19.07.2018 DE 102018005695
(43) Veröffentlichungstag der Anmeldung: 26.05.2021
(73) Patentinhaber: Linde GmbH, 82049 Pullach (DE)
(72) Erfinder: LANG, Martin, 80689 München (DE); HIRSCH, Alexander, 86938 Schondorf (DE)
(74) Vertreter: Fischer, Werner
(86) Internationale Anmeldenummer: PCT/EP2019/025211
(87) Internationale Veröffentlichungsnummer: WO 2020/015854

(56) Entgegenhaltungen:
- EP-A2- 2 103 569
- WO-A1-90/06282
- US-A1- 2005 066 813
- US-A1- 2013 097 929

## Beschreibung

Die Erfindung betrifft ein Verfahren zur Synthesegaserzeugung nach Anspruch 1 mit zumindest einem wärmeverbrauchenden Prozessschritt, bei dem Strippdampf für einen Entgaser erzeugt wird, wobei ein im Prozess anfallendes,

Sauergase und Wasserdampf enthaltendes erstes Fluid unter Bildung eines sauren Kondensats indirekt gegen ein zweites Fluid abgekühlt wird.

Weiterhin betrifft die Erfindung eine Vorrichtung nach Anspruch 4 zur Durchführung des erfindungsgemäßen Verfahrens.

Das ein Fluid indirekt gegen ein anderes Fluid abgekühlt wird, ist so zu verstehen, dass Wärme zwischen den beiden Fluiden über eine wärmeleitende Wand übertragen wird, die beide Fluide voneinander trennt und einen Stoffaustausch verhindert.

Verfahren und Vorrichtungen der gattungsgemäßen Art werden beispielsweise bei der thermochemischen Erzeugung von Synthesegas oder Wasserstoff eingesetzt. Hierbei wird ein Kohlenstoff bzw. Kohlenwasserstoff enthaltender Einsatz etwa durch Dampfreformierung oder Partielle Oxidation sowie Wassergas-Shift zu einem heißen, Wasserdampf und Sauergase enthaltenden Syntheserohgas konvertiert, das nachfolgend abgekühlt wird, um Wasser auszukondensieren und die Abtrennung der Sauergase in einer nachfolgenden Gaswäsche zu ermöglichen. Da sich ein Teil der Sauergase im auskondensierten Wasser löst und zusammen mit diesem eine Säure bildet, müssen die für die Abkühlung des Syntheserohgases eingesetzten Apparate entsprechend teuer aus einem säurebeständigen Material gefertigt sein.

Um die im Syntheserohgas enthaltene Wärme wirtschaftlich zu nutzen, wird sie nach dem Stand der Technik u.a. zur Erzeugung von sauberem Dampf eingesetzt, der typischerweise mit einem Druck von 5-100bar als sog. Exportdampf gegen Gutschrift an einen externen Verbraucher abgegeben wird. Dafür wird demineralisiertes Wasser (im Folgenden kurz DMW) entgast und anschließend mit einem Druck zwischen 30 und 120bar in einem als KSW-Vorwärmer bezeichneten Wärmetauscher indirekt gegen das abzukühlende Syntheserohgas von ca. 100°C bis knapp unterhalb seiner Siedetemperatur angewärmt. Nach der Anwärmung verdampft das entgaste DMW, das der Fachmann als Kesselspeisewasser (kurz KSW) kennt, in einer Dampftrommel zu Exportdampf.

Zur Entgasung des DMW wird ein Entgaser eingesetzt, der eine über einem Sumpfraum angeordnete Trennkolonne umfasst. Das zu entgasende, am Kopf der mit geringem Überdruck betriebenen Trennkolonne zugeführte DMW wird auf seinem Weg nach unten in intensiven Kontakt mit im Gegenstrom geführtem Strippdampf gebracht, bei dem es sich um einen entspannten Teil des sauberen, für den Export produzierten Dampfs handelt. Während sich entgastes DMW im Sumpfraum des Entgasers sammelt, wird der insbesondere mit Sauerstoff, aber auch mit anderen aus dem DMW abgetrennten Gasen beladene Strippdampf am Kolonnenkopf abgezogen und in die Atmosphäre entsorgt. Der als Strippdampf abgezweigte Teil des sauberen Dampfes geht somit verloren und kann nicht mehr als Exportdampf wirtschaftlich verwertet werden.

Üblicherweise wird stromabwärts des KSW-Vorwärmers wenigstens ein zusätzlicher Wärmetauscher angeordnet, um Niedertemperaturwärme des Syntheserohgases wirtschaftlich zu nutzen, indem sie beispielsweise einem wärmeverbrauchenden Schritt innerhalb des Prozesses zur Verfügung gestellt wird. Nachteilig hierbei ist allerdings der erhöhte Druckverlust im Strömungsweg des Syntheserohgases. Weil der zusätzliche Wärmetauscher genauso wie der KSW-Vorwärmer mit saurem Kondensat in Kontakt kommt, muss auch er teuer aus einem Material wie etwa Edelstahl gefertigt sein, das bei Betriebsbedingungen ausreichend säurebeständig ist. Um Fehlverteilungen des Syntheserohgases auf den Austauschflächen zu vermeiden, ist der zusätzliche Wärmetauscher außerdem entweder auf einem tieferen Niveau als der KSW-Vorwärmer angeordnet, so dass genügend Druck zur Verfügung steht, um das Kondensat kontrolliert verteilen zu können, oder es ist zwischen dem KSW-Vorwärmer und dem zusätzlichen Wärmetauscher ein Kondensatabscheider angeordnet, der dafür sorgt, dass die Austauschflächen nur noch von einer Gasphase angeströmt werden. In beiden Varianten sind lange und teure Edelstahlleitungen erforderlich, die die Wirtschaftlichkeit der Synthesegas- bzw. Wasserstofferzeugung beeinträchtigen.

Beispiele für gattungsgemäße Verfahren und Vorrichtungen finden sich in der EP2103569, US2005066813, US2013097929 und in der WO9006282.

Aufgabe der vorliegenden Erfindung ist es daher, Verfahren und Vorrichtungen der gattungsgemäßen Art anzugeben, die dazu geeignet sind, einen oder mehrere der Nachteile des Standes der Technik zu überwinden.

Diese Aufgabe wird verfahrensseitig erfindungsgemäß dadurch gelöst, dass das erste Fluid in wenigstens zwei aufeinanderfolgenden Schritten abgekühlt wird, zwischen denen dem zweiten Fluid indirekt Wärme zur Verwendung in dem wärmeverbrauchenden Prozessschritt entzogen wird.

Durch das erfindungsgemäße Verfahren kann ein größerer Teil der im ersten Fluid enthaltenen Wärme als im Stand der Technik einer wirtschaftlichen Nutzung zugeführt werden, ohne dass ein zusätzlicher Wärmetauscher in den Strömungsweg des ersten Fluids integriert zu werden braucht.

Das erfindungsgemäße Verfahren sieht vor, ein chemisch neutrales zweites Fluid einzusetzen und die zur Verwendung in dem wärmeverbrauchenden Prozessschritt bestimmte Wärme auf ein ebenfalls chemisch neutrales Medium zu übertragen. Als chemisch neutral soll dabei ein Stoff gelten, wenn er unter den Betriebsbedingungen des Prozesses weder sauer noch alkalisch oder zumindest deutlich weniger aggressiv ist, als das aus dem ersten Fluid gebildete saure Kondensat. Unter diesen Voraussetzungen kann für die Übertragung der Wärme zwischen den beiden Medien ein Wärmetauscher eingesetzt werden, der preisgünstig aus einem Material gefertigt ist, das weder säure- noch laugebeständig zu sein braucht.

Es handelt sich bei dem erfindungsgemäß durchgeführten Prozess um eine Synthesegaserzeugung, bei der ein Kohlenstoff enthaltender Einsatz thermochemisch konvertiert wird, um als Zwischenprodukt ein Sauergase und Wasserdampf enthaltendes heißes Syntheserohgas als erstes Fluid zu erhalten, das zur Gewinnung von sauberem Exportdampf gegen DMW als zweitem Fluid abgekühlt wird.

Besonders bevorzugt wird dem DMW zwischen den beiden Schritten der Syntheserohgasabkühlung Wärme entzogen, um sie zur Erzeugung von Strippdampf zu verwenden, der zur Entgasung von DMW eingesetzt wird. Sinnvollerweise wird dem angewärmten DMW hierzu Wärme über einen, im Sumpfraum eines mit nur geringem Überdruck betriebenen Entgasers angeordneten, als Zwischenkühler bezeichneten Wärmetauscher entzogen und indirekt auf bereits entgastes und im Sumpfraum gesammeltes DMW übertragen, das dabei verdampft und als Strippdampf in einer über dem Sumpfraum angeordneten Trennkolonne (DMW-Trennkolonne) des Entgasers nach oben steigt. Am Kolonnenkopf wird zum einen das zu entgasende DMW zugeführt und zum anderen der mit abgetrennten Gasen beladene Strippdampf in die Atmosphäre entlassen, während entgastes DMW aus dem Sumpfraum abgezogen, auf Druck gebracht und zur Abkühlung des Syntheserohgases eingesetzt wird.

Das DMW kann erfindungsgemäß entweder entgast werden, ehe es gegen Syntheserohgas angewärmt wird oder erst, nachdem ihm Wärme zur Erzeugung des für die DMW-Entgasung eingesetzten Strippdampfs entzogen wurde.

Gewöhnlich wird bei einer thermochemischen Synthesegaserzeugung aus dem im Prozess anfallendem Kondensat (Prozesskondensat) sog. Prozessdampf erzeugt, der aufgrund seiner geringen Reinheit nicht an einen externen Verbraucher abgegeben werden kann und daher prozessintern genutzt wird. Wie das DMW, muss auch das Prozesskondensat vor seiner Verdampfung entgast werden, wozu es in einer eigenen Trennkolonne (PK-Trennkolonne) bei geringem Überdruck mit Strippdampf behandelt wird, bei dem es sich nach dem Stand der Technik ebenfalls um einen entspannten Teil des sauberen, für den Export produzierten Dampfs handelt.

Das erfindungsgemäße Verfahren weiterbildend, wird dagegen vorgeschlagen, dem DMW zwischen den zwei Schritten zur Abkühlung des Syntheserohgases Wärme zu entziehen, um sie zur Erzeugung von Strippdampf zu verwenden, der bei der Entgasung des für die Prozessdampferzeugung bestimmten Prozesskondensat eingesetzt wird. Besonders bevorzugt wird dem DMW hierzu Wärme über den, in dem der DMW-Trennkolonne zugeordneten Sumpfraum angeordneten Zwischenkühler entzogen und indirekt auf dort gesammeltes und bereits entgastes DMW übertragen, das dabei verdampft und als Strippdampf in die PK-Trennkolonne überführt wird.

Weiterhin betrifft die Erfindung eine Vorrichtung zur Durchführung des beschriebenen Prozesses mit wenigstens einem wärmeverbrauchenden Prozessschritt, aufweisend eine Abkühleinrichtung, mit der ein im Prozess anfallendes, Sauergase und Wasserdampf enthaltendes erstes Fluid unter Bildung eines sauren Kondensats indirekt gegen ein zweites Fluid abkühlbar ist.

Die gestellte Aufgabe wird vorrichtungsseitig erfindungsgemäß dadurch gelöst, dass die Abkühleinrichtung zwei seriell angeordnete, jeweils von den beiden Fluiden durchströmbare Abkühlstufen umfasst, zwischen denen ein als Zwischenkühler bezeichneter Wärmetauscher angeordnet ist, über den dem zweiten Fluid Wärme indirekt entzogen und dem wärmeverbrauchenden Prozessschritt zugeführt werden kann.

Dabei ist die erfindungsgemäße Vorrichtung zur Durchführung einer Synthesegaserzeugung geeignet, bei der ein Kohlenstoff enthaltender Einsatz thermochemisch konvertiert werden kann, um als Zwischenprodukt ein Wasserstoff, Kohlenmonoxid, Sauergase und Wasserdampf enthaltendes heißes Syntheserohgas als erstes Fluid zu erhalten, das in der Abkühleinrichtung zur Gewinnung von sauberem Exportdampf gegen DMW als zweitem Fluid abkühlbar ist.

Besonders bevorzugt umfasst die Abkühleinrichtung der erfindungsgemäßen Vorrichtung einen Entgaser zur Entgasung von für die Exportdampfgewinnung vorgesehenem DMW. Der Entgaser umfasst eine über einem Sumpfraum angeordnete Trennkolonne (DMW-Trennkolonne), wobei der Zwischenkühler im Sumpfraum des Entgasers angeordnet ist, so dass entgastes, sich im Sumpfraum sammelndes DMW gegen das im Zwischenkühler abzukühlende DMW zu Strippdampf für die Entgasung von DMW umgesetzt werden kann.

Sinnvollerweise ist der Entgaser im Strömungsweg des DMW so angeordnet, dass die Entgasung des DMW stromaufwärts der Abkühleinrichtung durchführbar ist. Möglich ist aber auch eine Anordnung, bei der das DMW nach Anwärmung in der ersten Abkühlstufe stromabwärts des Zwischenkühlers und stromaufwärts der zweiten Abkühlstufe entgast werden kann.

Die erfindungsgemäße Vorrichtung kann auch einen weiteren Entgaser aufweisen, mit dem im Prozess anfallendes Kondensat mit Hilfe von Strippdampf entgast werden kann, ehe es weiter zu Prozessdampf aufbereitet wird. In diesem Fall sieht eine zweckmäßige Weiterbildung der Erfindung eine strömungstechnische Verbindung zwischen den beiden Entgasern vor, so dass im Sumpfraum des DMW-Entgasers erfindungsgemäß erzeugter DMW-Dampf als Strippdampf in die Trennkolonne (PK-Trennkolonne) des Kondensat-Entgaser einleitbar ist. Die beiden Entgaser können jeweils als eigenständige Apparate mit Trennkolonne und Sumpfraum ausgeführt und lediglich durch eine Strippdampfleitung verbunden sein. Denkbar ist auch eine Bauweise, bei der die beiden Entgaser über einem gemeinsam nutzbaren Sumpfraum angeordnet sind, wobei die PK-Trennkolonne an ihrem unteren Ende einen Kaminboden aufweist, der den Eintritt von entgastem, aber nicht für die Erzeugung von sauberem Exportdampf geeignetem Kondensat in den Sumpfraum verhindert, den Durchtritt von Strippdampf aus dem Sumpfraum jedoch erlaubt. Die jeweiligen Kolonneneinbauten können hierbei in separaten Einhausungen oder unmittelbar nebeneinander und lediglich durch eine ebene Wand voneinander getrennt in einer gemeinsamen Einhausung angeordnet sein. Weiterhin vorstellbar ist es, die Einbauten der PK-Trennkolonne in einer gemeinsamen Einhausung unmittelbar über denen der DMW-Trennkolonne anzuordnen, wobei auch in dieser Variante ein Kaminboden die PK-Trennkolonne nach unten abschließt.

Im Folgenden soll die Erfindung anhand dreier, in den **Figuren** 1 bis 3 schematisch dargestellter Ausführungsbeispiele näher erläutert werden.

Die Figur 1 zeigt einen Prozess mit einem wärmeverbrauchenden Prozessschritt, in dem ein heißes erstes Fluid erfindungsgemäß abgekühlt wird.

Die Figuren 2 und 3 zeigen jeweils einen Ausschnitt aus einer Synthesegaserzeugung, bei der heißes, als Zwischenprodukt anfallendes Syntheserohgas erfindungsgemäß unter Erzeugung von Strippdampf abgekühlt wird. In den beiden Figuren sind gleiche Anlagenteile und Prozessströme mit gleichen Bezugsziffern gekennzeichnet.

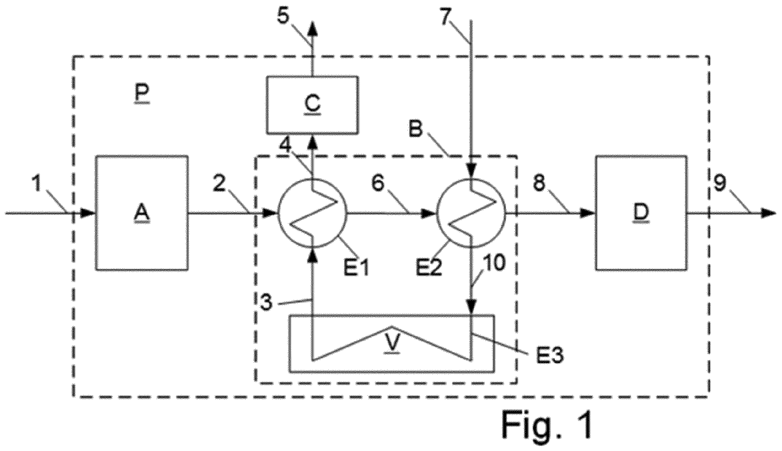

Dem Prozess P in Figur 1 wird über Leitung 1 ein Einsatzstoff zugeführt, aus dem im Prozessschritt A als Zwischenprodukt ein Sauergase und Wasserdampf enthaltendes erstes Fluid 2 erhalten wird. Um Wasser auszukondensieren und nachfolgend Sauergase abtrennen zu können, wird das erste Fluid 2 der Abkühleinrichtung B zugeführt, wo es in einem ersten Abkühlschritt im Wärmetauscher E1 gegen ein zweites Fluid 3 indirekt abgekühlt wird. Während das zweite Fluid angewärmt über Leitung 4 den Wärmetauscher E1 verlässt und im Prozessschritt C beispielsweise zu einem Produkt 5 aufbereitet wird, wird das abgekühlte erste Fluid 6 in den Wärmetauscher E2 weitergeleitet, wo es gegen das kalt über Leitung 7 von außen zugeführte erste Fluid bis unter den Wassertaupunkt abgekühlt wird. In dem dabei anfallenden Kondensat löst sich ein Teil der Sauergase, so dass über Leitung 8 ein saures zweiphasiges Stoffgemisch den Wärmetauscher E2 verlässt, das in den Prozessschritt D weitergeleitet wird, wo insbesondere durch Abtrennung von Wasser und Sauergasen das Produkt 9 erhalten wird. Dem im Wärmetauscher E2 angewärmten zweiten Fluid 10 wird im Zwischenkühler E3 Wärme entzogen, die im wärmeverbrauchenden Prozessschritt F verwendet wird. Zur erneuten Anwärmung wird das im Zwischenkühler E3 abgekühlte zweite Fluid über Leitung 3 dem Wärmetauscher E1 zugeführt.

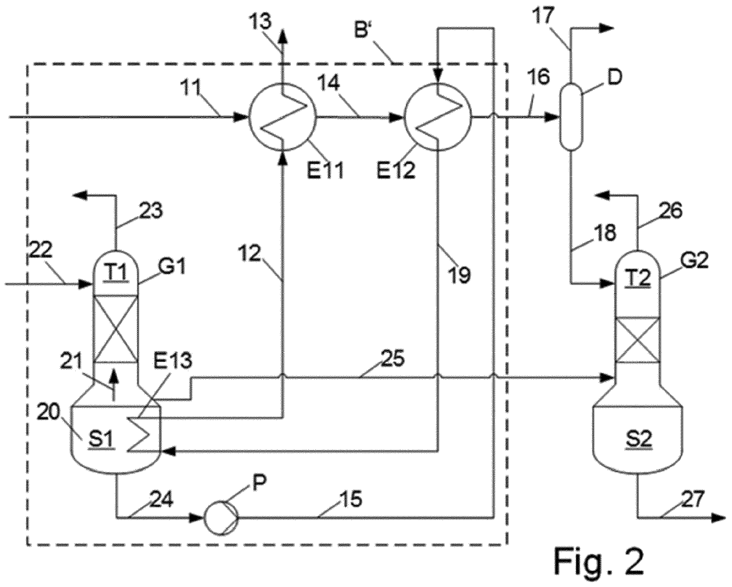

In der Figur 2 wird über Leitung 11 heißes, Wasser und Sauergase umfassendes Syntheserohgas mit einer Temperatur zwischen 370 und 150°C einem ersten Wärmetauscher E11 zugeführt, wo es in einem ersten Schritt indirekt gegen entgastes DMW 12 auf eine zwischen 300 und 120°C liegende Temperatur abgekühlt wird. Während das entgaste DMW 13 mit einer knapp unterhalb seiner Siedetemperatur liegenden Temperatur aus dem Wärmetauscher E11 austritt, um nachfolgend in einer Dampftrommel (nicht dargestellt) zu Exportdampf verdampft zu werden, wird dem im ersten Schritt abgekühlten Syntheserohgas 14 in einem zweiten Wärmetauscher E12 gegen ebenfalls entgastes DMW 15 weiter Energie entzogen, wobei Wasser auskondensiert und ein zweiphasiges Stoffgemisch 16 entsteht, das in der Trenneinrichtung D in ein weitgehend wasserfreies Synthesegas 17 und saures Prozesskondensat 18 getrennt wird. Das im zweiten Wärmetauscher E12 gegen das Syntheserohgas 14 angewärmte entgaste DMW 19 gibt einen Teil seiner Wärme über den Zwischenkühler E13 wieder ab, ehe es über Leitung 12 dem ersten Wärmetauscher E11 zugeführt wird. Der als Verdampfer ausgeführte Zwischenkühler E13 ist im Sumpfraum S1 des mit geringem Überdruck betriebenen DMW-Entgasers G1 angeordnet und von bereits entgastem DMW 20 umgeben, aus dem durch die zugeführte Wärme Strippdampf entsteht. Ein Teil 21 des Strippdampfs steigt in der über dem Sumpfraum S1 angeordneten Trennkolonne T1 des DMW-Entgasers G1 nach oben und wird dabei in intensiven Kontakt mit am Kopf der DMW-Trennkolonne T1 zugeführtem DMW 22 gebracht, das dabei entgast wird. Der mit den aus dem DMW 22 abgetrennten Gasen beladene Strippdampf 23 wird vom Kopf der DMW-Trennkolonne T1 abgezogen und einer Entsorgung zugeführt (nicht dargestellt), während das entgaste DMW über Leitung 24 aus dem Sumpf S1 des DMW-Entgasers abgezogen und nach Druckerhöhung in der Pumpe P dem zweiten Wärmetauscher E12 als Kühlmittel 15 zugeführt wird.

Auch das Prozesskondensat 18 wird entgast, wozu es über Kopf der Trennkolonne T2 des PK-Entgasers G2 aufgegeben wird, in der es nach unten strömt und dabei in intensiven Kontakt mit über Leitung 25 aus dem Sumpf S1 des DMW-Entgasers G1 zugeführtem Strippdampf gebracht wird. Während der mit den aus dem Prozesskondensat 18 abgetrennten Gasen beladene Strippdampf 26 zu seiner Entsorgung vom Kopf der PK-Trennkolonne T2 abgezogen wird, kann aus dem Sumpf S2 des PK-Entgasers G2 Kondensat 27 entgast abgezogen und nachfolgend zu Prozessdampf umgesetzt werden (nicht dargestellt).

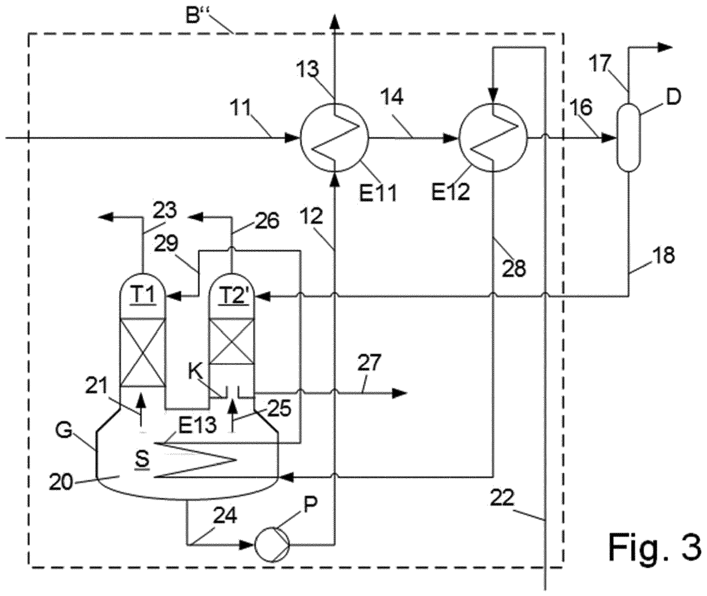

In Figur 3 wird DMW 22 zunächst im Wärmetauscher E12 gegen das bereits in einem ersten Schritt im Wärmetauscher E11 abgekühlte Syntheserohgas 14 angewärmt, ehe es zur Abgabe von Wärme über Leitung 28 dem Zwischenkühler E13 zugeführt wird. Der als Verdampfer ausgeführte Zwischenkühler E13 ist im Sumpfraum S des mit geringem Überdruck betriebenen Entgasers G angeordnet und von entgastem DMW 20 umgeben, aus dem durch die über das DMW 28 zugeführte Wärme Strippdampf entsteht. Ein erster Teil 21 des Strippdampfs steigt in der über dem Sumpfraum S angeordneten DMW-Trennkolonne T1 nach oben, an deren Kopf das im Zwischenkühler E13 abgekühlte DMW 29 zugeführt wird, um auf seinem Weg nach unten mit Hilfe des Strippdampfs 21 entgast zu werden. Der mit den aus dem DMW 29 abgetrennten Gasen beladene Strippdampf 21 wird vom Kopf der DMW-Trennkolonne T1 abgezogen und einer Entsorgung zugeführt (nicht dargestellt).

Zu seiner Entgasung wird das Prozesskondensat 18 über Kopf der PK-Trennkolonne T2' aufgegeben, die ebenfalls über dem Sumpfraum S des Entgasers G angeordnet ist. Auf dem Weg nach unten wird das Prozesskondensat in intensiven Kontakt mit Strippdampf 25 gebracht, der durch den Kaminboden K aus dem Sumpfraum S nach oben strömt. Während der mit den aus dem Prozesskondensat 18 abgetrennten Gasen beladene Strippdampf 26 zu seiner Entsorgung vom Kopf der PK-Trennkolonne T2' abgeführt wird, kann aus dem Kaminboden K Kondensat 27 entgast abgezogen und nachfolgend zu Prozessdampf umgesetzt werden (nicht dargestellt).

## Patentansprüche

1. Verfahren zur Synthesegaserzeugung mit zumindest einem wärmeverbrauchenden Prozessschritt, bei dem Strippdampf (21) für einen Entgaser (G1) erzeugt wird, wobei ein durch thermochemische Konvertierung eines Kohlensoff enthaltenden Einsatzes erhaltenes, Sauergase und Wasserdampf enthaltendes heißes Syntheserohgas (11) unter Bildung eines sauren Prozesskondensats (18) indirekt gegen demineralisiertes Wasser (DMW) (22) abgekühlt wird, welches zur Gewinnung von sauberem Exportdampf verwendet wird, **dadurch gekennzeichnet, dass** das Sauergase und Wasserdampf enthaltende heiße Syntheserohgas (11) in wenigstens zwei aufeinanderfolgenden Schritten (E1, E2) abgekühlt wird, zwischen denen dem DMW (19) indirekt Wärme zur Verwendung in dem wärmeverbrauchenden Prozessschritt entzogen wird.

2. Verfahren nach Anspruch 1, **dadurch gekennzeichnet, dass** dem DMW zwischen den beiden Schritten der Syntheserohgasabkühlung Wärme entzogen wird, um sie zur Erzeugung von Strippdampf (21) zu verwenden, der zur Entgasung von DMW (22) eingesetzt wird.

3. Verfahren nach einem der Ansprüche 1 oder 2, **dadurch gekennzeichnet, dass** dem DMW zwischen den beiden Schritten der Syntheserohgasabkühlung Wärme entzogen wird, um sie zur Erzeugung von Strippdampf (25) zu verwenden, der bei der Entgasung des Prozesskondensats (18) eingesetzt wird.

4. Vorrichtung zur Synthesegaserzeugung gemäß dem Verfahren nach einem der vorhergehenden Ansprüche mit wenigstens einem wärmeverbrauchenden Prozessschritt, bei dem Strippdampf (21) für einen Entgaser (G1, G) erzeugbar ist, aufweisend eine Abkühleinrichtung (B), mit der ein durch thermochemische Konvertierung eines Kohlensoff enthaltenden Einsatzes erhältliches, Sauergase und Wasserdampf enthaltendes heißes Syntheserohgas (11) unter Bildung eines sauren Prozesskondensats (18) indirekt gegen demineralisiertes Wasser (DMW) (22) abkühlbar ist, **dadurch gekennzeichnet, dass** die Abkühleinrichtung (B) zwei seriell angeordnete, jeweils von dem heißen Syntheserohgas (11, 14) und dem DMW (12, 15) durchströmbare Abkühlstufen (E1, E2) umfasst, zwischen denen ein als Zwischenkühler bezeichneter Wärmetauscher (E3) angeordnet ist, über den dem DMW (19) Wärme indirekt entzogen und dem wärmeverbrauchenden Prozessschritt zugeführt werden kann.

5. Vorrichtung nach Anspruch 4, **dadurch gekennzeichnet, dass** die Abkühleinrichtung (B`, B") einen Entgaser (G1, G) zur Entgasung von für die Exportdampfgewinnung vorgesehenem DMW (22) umfasst, wobei der Zwischenkühler (E13) im Sumpfraum (S1, S) des Entgasers (G1, G) angeordnet ist, so dass entgastes, sich im Sumpfraum (S1, S) sammelndes DMW gegen das im Zwischenkühler (E13) abzukühlende DMW (19, 28) zu Strippdampf (21) für die Entgasung von DMW (22) umgesetzt werden kann.

6. Vorrichtung nach einem der Ansprüche 4 oder 5, **dadurch gekennzeichnet, dass** sie eine PK-Trennkolonne (T2, T2') aufweist, mit der bei der Abkühlung des Syntheserohgases (11) anfallendes Prozesskondensat (18) mit Hilfe von Strippdampf (25) entgast werden kann, ehe es weiter zu Prozessdampf aufbereitet wird, wobei die PK-Trennkolonne (T2, T2`) strömungstechnisch mit dem Sumpfraum (S1, S) des Entgasers (G1, G) verbunden ist, so dass dort aus entgasten DMW (20) erzeugter DMW-Dampf als Strippdampf (25) in die PK-Trennkolonne (T2, T2`) einleitbar ist.

## Claims

1. Method for generating synthesis gas comprising at least one heat-consuming process step, in which stripping steam (21) is produced for a degasser (G1), an acid gas obtained by thermochemical conversion of a carbon-containing charge and hot synthesis raw gas (11) containing water vapor being indirectly cooled with demineralized water (DMW) (22) to form an acidic process condensate (18), which demineralized water is used to obtain clean export steam, **characterized in that** the hot synthesis raw gas (11) containing the acid gases and water vapor is cooled in at least two successive steps (E1, E2), between which heat is indirectly extracted from the DMW (19) for use in the heat-consuming process step.

2. Method according to claim 1, **characterized in that** heat is extracted from the DMW between the two steps of the synthesis raw gas cooling in order to use it for the generation of stripping steam (21), which is used for the degassing of DMW (22).

3. Method according to claim 1 or claim 2, **characterized in that** heat is extracted from the DMW between the two steps of the synthesis raw gas cooling in order to use it to produce stripping steam (25), which is used in the degassing of the process condensate (18).

4. Device for generating synthesis gas per the method according to any of the preceding claims, having at least one heat-consuming process step in which stripping steam (21) can be generated for a degasser (G1, G), said device comprising a cooling device (B) with which an acid gas obtainable by thermochemical conversion of a carbon-containing charge and hot synthesis raw gas (11) containing water vapor can be indirectly cooled with demineralized water (DMW) (22) to form an acidic process condensate (18), **characterized in that** the cooling device (B) comprises two cooling stages (E1, E2) arranged in series, through which the hot synthesis raw gas (11, 14) and the DMW (12, 15) can flow, and between which a heat exchanger (E3), referred to as an intercooler, is arranged, via which heat can be indirectly extracted from the DMW (19) and supplied to the heat-consuming process step.

5. Device according to claim 4, **characterized in that** the cooling device (B`, B") comprises a degasser (G1, G) for degassing DMW (22) provided for the export steam recovery, wherein the intercooler (E13) is arranged in the bottom space (S1, S) of the degasser (G1, G), so that degassed DMW collecting in the sump chamber (S1, S), when in the presence of the DMW (19, 28) to be cooled in the intercooler (E13), can be converted to stripping steam (21) for the degassing of DMW (22).

6. Device according to claim 4 or claim 5, **characterized in that** it has a PK separation column (T2, T2') with which the process condensate, (18) which accumulates during the cooling of the synthesis raw gas, (11) can be degassed with the aid of stripping steam (25) before it is further processed to form process steam, the PK separation column (T2, T2`) being fluidically connected to the sump chamber (S1, S) of the degasser (G1, G), so that DMW vapor produced there from degassed DW (20) can be introduced into the PK separation column (T2, T2') as stripping steam (25).

## Revendications

1. Procédé de génération de gaz de synthèse comprenant au moins une étape de processus consommatrice de chaleur, dans laquelle de la vapeur d'extraction (21) est générée pour un dégazeur (G1), dans lequel un gaz brut de synthèse (11) chaud, obtenu par la conversion thermochimique d'un insert contenant du carbone et contenant des gaz acides et de la vapeur d'eau, est refroidi indirectement en formant un condensat de processus acide (18) contre de l'eau déminéralisée (EDM) (22), laquelle est utilisée pour l'obtention de vapeur propre d'export, **caractérisé en ce que** le gaz brut de synthèse (11) chaud contenant des gaz acides et de la vapeur d'eau est refroidi en au moins deux étapes (E1, E2) consécutives, entre lesquelles de la chaleur est extraite indirectement de l'EDM (19) pour l'utilisation dans l'étape de processus consommatrice de chaleur.

2. Procédé selon la revendication 1, **caractérisé en ce que** de la chaleur est extraite de l'EDM entre les deux étapes de refroidissement du gaz brut de synthèse pour être utilisée pour la génération de vapeur d'extraction (21), laquelle est utilisée pour le dégazage de l'EDM (22).

3. Procédé selon l'une quelconque des revendications 1 ou 2,
**caractérisé en ce que** de la chaleur est extraite de l'EDM entre les deux étapes de refroidissement du gaz brut de synthèse pour être utilisée pour la génération de vapeur d'extraction (25), laquelle est utilisée lors du dégazage du condensat de processus (18).

4. Dispositif pour la génération de gaz de synthèse selon le procédé selon une quelconque des revendications précédentes comprenant au moins une étape de processus consommatrice de chaleur, dans laquelle de la vapeur d'extraction (21) peut être générée pour un dégazeur (G1, G), présentant un dispositif de refroidissement (B), au moyen duquel un gaz brut de synthèse (11) chaud, pouvant être obtenu par conversion thermochimique d'un insert contenant du carbone et contenant des gaz acides et de la vapeur d'eau, peut être refroidi indirectement en formant un condensat de processus acide (18) contre de l'eau déminéralisée (EDM) (22), **caractérisé en ce que** le dispositif de refroidissement (B) comprend deux étages de refroidissement (E1, E2) disposés en série, pouvant respectivement être traversés par le gaz brut de synthèse (11, 14) chaud et l'EDM (12, 15), entre lesquels est disposé un échangeur de chaleur (E3) désigné comme refroidisseur intermédiaire, à travers lequel de la chaleur peut être extraite indirectement de l'EDM (19) et fournie à l'étape de processus consommatrice de chaleur.

5. Dispositif selon la revendication 4, **caractérisé en ce que** le dispositif de refroidissement (B`, B") comprend un dégazeur (G1, G) pour le dégazage de l'EDM (22) prévue pour l'obtention de vapeur d'export, dans lequel le refroidisseur intermédiaire (E13) est disposé dans l'espace de fond (S1, S) du dégazeur (G1, G), de sorte que l'EDM dégazée s'accumulant dans l'espace de fond (S1, S) puisse être convertie contre l'EDM (19, 28) à refroidir dans le refroidisseur intermédiaire (E13) en vapeur d'extraction (21) pour le dégazage d'EDM (22).

6. Dispositif selon l'une quelconque des revendications 4 ou 5,
**caractérisé en ce qu'il** présente une colonne de séparation de condensat de processus (T2, T2'), au moyen de laquelle le condensat de processus (18) produit lors du refroidissement du gaz brut de synthèse (11) peut être dégazé à l'aide de vapeur d'extraction (25), avant d'être transformé en vapeur de processus, dans lequel la colonne de séparation de condensat de processus (T2, T2') est reliée fluidiquement à l'espace de fond (S1, S) du dégazeur (G1, G), de sorte que la vapeur d'EDM produite là à partir d'EDM dégazée (20) puisse être introduite en tant que vapeur d'extraction (25) dans la colonne de séparation de condensat de processus (T2, T2`).
